# EUROPEAN PATENT SPECIFICATION

(11) **EP 0 540 638 B1**
(45) Date of publication and mention of the grant of the patent: **02.10.1996**
(21) Application number: 91914072.3
(22) Date of filing: 05.07.1991
(51) Int. Cl.: G01S 13/74, B67D 5/04

(54) **DEVICE FOR POSITIONING A FIRST OBJECT RELATIVE TO A SECOND OBJECT**
ANLAGE ZUR POSITIONIERUNG EINES ERSTEN OBJEKTES HINSICHTLICH EINES ZWEITEN OBJEKTES
SYSTEME POUR POSITIONNER UN PREMIER OBJET PAR RAPPORT A UN DEUXIEME OBJET

(30) Priority: 24.07.1990 SE 9002493; 22.01.1991 SE 9100185
(43) Date of publication of application: 12.05.1993
(73) Proprietor: GUNNARSSON, Staffan, S-165 77 Hässelby (SE)
(72) Inventor: GUNNARSSON, Staffan, S-165 77 Hässelby (SE)
(74) Representative: Örtenblad, Bertil Tore
(86) International application number: SE9100478
(87) International publication number: WO9201952

(56) References cited:
- EP-A- 0 255 095
- FR-A- 2 527 870
- US-A- 4 673 936
- US-A- 4 728 955

## Description

The present invention relates to an arrangement for positioning a first object relative to a second object, and primarily for positioning an automatic fuelling device relative to vehicles.

It is known to automatically fuel vehicles, where a fuelling device is mounted on the flexible arm of a robot.

position finding can be made using optical technique, where for instance a vision system in the robot can determine the position of an indicator label that is mounted on the vehicle close to the filling point.

Optical systems however have problems in obtaining a suitable capture range, are fairly complex and thereby expensive and are also sensitive to environmental influences like dirt.

Another way of position finding is described in the swedish patent No 8403564-1, where a microwave sensor in the robotic head can make use of a microvave based transponder in the vehicle. The transponder then continously modulates signals from the sensor and reflects than back for, by phase and amplitude measurement, determining the location of the transponder in relation to the sensor.

A known method for automatic fuelling uses a microwave based transponder, with a directive antenna on a large ground plane, that is placed in a special tank door in the vehicle that has a leaded coupling to an adapter of a specific design for each vehicle type. The unit that is formed by transponder, tank door and adapter casing forms a kit that is needed for conversion of each vehicle for automatic fuelling, and substitutes the original plastic or metal tank door and tank cap.

A simple mounting of the transponder has not yet been possible because the size and weight of the unit has prevented a simple mounting on the vehicle side. In such systems vehicle conversion also becomes complicated, since the original tank door is difficult to remove on many vehicles. This method furthermore requires that a specific adapter is designed for each vehicle model which may lead to extra costs.

Public acceptance of the system is significantly related to the simplicity of conversion of vehicles for automatic fuelling and to the aesthetichal look of the converted vehicle. Since the transponders on a significant part of the vehicles are to be mounted by end users and not during vehicle vehicle manufacture, it is strongly preferred that its dimensions are compact.

It is also of value that the weight is low, since one simple mounting is on the vehicle surface, attaching the transponder to the vehicle with an adhesive.

It is also of importance that the system cost stays in good relation with the benefits of automatic fuelling.

Choosing higher microwave frequencies would make it possible to make the antenna element of the transponder smaller and lighter, but then other problems would arise like decreased antenna efficiency, size limitations of other components such as the power source, increased component cost, difficulties with international frequency regulations and increased sensitivity to environmental factors like waterfilm and dirt on the transponder and the sensor.

A problem that may occur in systems where the is mounted in the tank door is that small vehicle movements may result in failed docking between robot and vehicle. This may be because of suspension movements when people enters or leaves the vehicle, or because of uncontrolled rolling of non-braked vehicles. Such systems have no possibility to give continous position information for compensation of the movement as soon as the position-indicator equipped tank door is opened. This problem is however smaller on heavy vehicles like buses and lorries.

A major problem with presently known transponders is that they are not small enough to be easy to adapt to vehicles. An object of the present invention is to greatly reduce the size of the transponders.

Another object of the invention is to make a that makes vehicle conversion simple, and where position indicating accuracy, weight and cost of the transponder have been optimized.

A further object is to make the physical appearance of the transponder as attractive as possible, and to make it resistant to wear, e.g. from automatic car washers.

Still another object is to make continous position sensing possible throughout the complete fuelling sequence.

US 4,673,936 discloses a system for locating a person having a transmitter. An antenna is used having a slot 11. If such an antenna is located close to a reflection plane, the reflected wave will be 180° out of phase relative to the wave transmitted perpendicular from the antenna. Thus, the lastmentioned wave will be cancelled by the reflected wave.

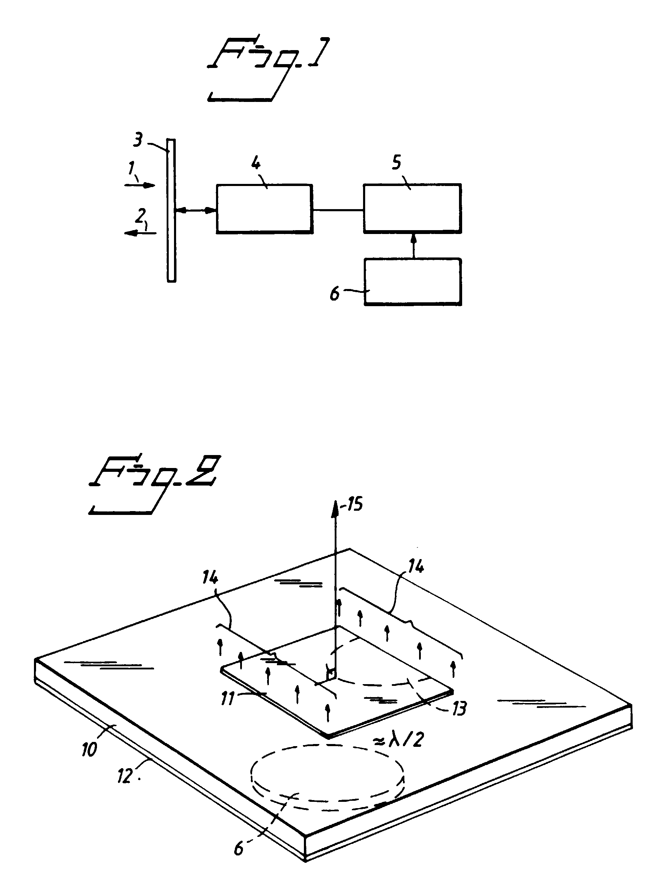

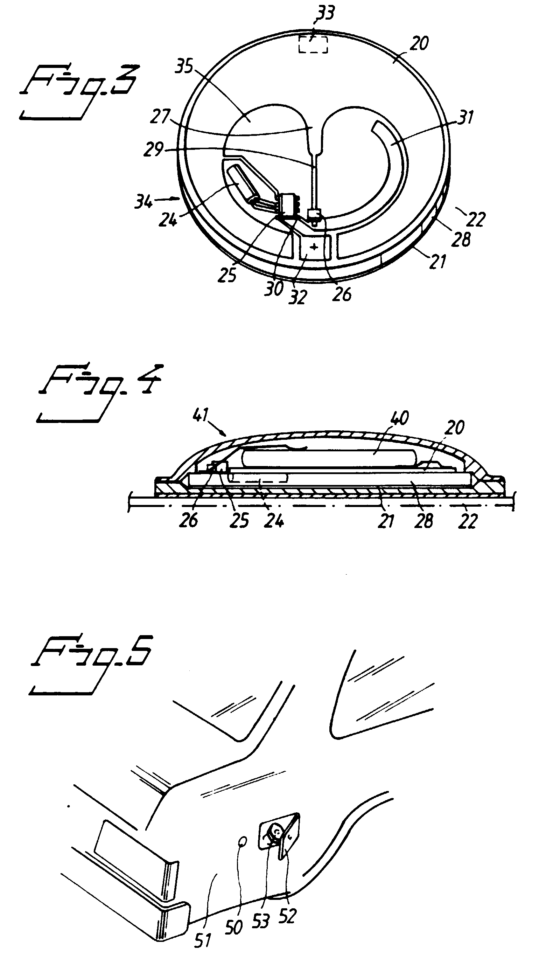

In order to avoid this US 4,673,936 shows an absorber plate 20 which absorbs the microwave that is radiated from the antenna downwards in Fig. 2.

The present invention relates to an arrangement for positioning a first object relative to a second object comprising a transmitter and receiver unit provided at said first object and a transponder provided at said second object and operating at a frequency in the microwave range, said transponder including a power source and/or one or more electronic units, an antenna element, a dielectric material and a ground plane, said antenna element being arranged with said ground plane via said dielectric material, said ground plane being of similar size as said antenna element, and is characterized in that the antenna element is made in microstrip technique, in that the arrangement further comprises a reflector plane located behind the transponder and at a distance from the antenna element of at most 1/10 of the operating wavelength, the transponder being arranged to cooperate with said reflector plane in order to obtain an antenna radiating diagram that is directed normal to said antenna element and pointing in the direction away from said reflecting plane, and in that said power source and/or said one or more electronic units are placed inside the circumference of said antenna element at either side of said dielectric material.

By making the antenna in the described way, where it is arranged to cooperate with a larger reflector plane placed behind the antenna, the transponder can be made significantly smaller than known transponders in spite of that the same frequency range is used as the one currently used for the present application.

According to a prefered embodiment of the invention the microstrip antenna element is a patch antenna element 20 that via a dielectric material 28 is arranged with a plane 21 with a diametric extension of less than 1.7 times, and more than 0.6 times that of the antenna element, and where the reflection of the back lobe thereby created is reflected by a surface 22 behind the transponder and added to the direct signal form the antenna to form a radiating diagram directed perpendicular to the surface or the antenna element.

According to an alternative embodiment the microstrip antenna element comprises at least one dipole antenna element 60;70, of a folded type arranged with a ground plane 21 with a diametric extension of less than 1.7 times, and more than 0.6 times that of the antenna element, and where the reflection of the back lobe thereby created is reflected by a surface 22 behind the transponder and added to the direct signal from the antenna element to form a radiating diagram directed perpendicular to the surface of the antenna element.

By diametric extension is meant the diameter of a circle that encloses the ground plane 21 respectively the antenna element 20;60;70.

The accuracy problem can be solved by mounting the transponder directly on a well defined reflecting surface which is large compared to the antenna element diameter, e g the side surface of the vehicle rearly of the tank door, and using an antenna design that makes use of this reflecting surface in a defined way.

The dimension and weight problems have been solved by using a microstrip antenna with small dimensions in relation to its operating frequency. A preferred embodiment of the antenna comprises a conventional patch antenna, where the surface of the ground plane has been reduced to similar size as the patch, instead of, as in a normal round or rectangular patch antenna, to be typically four times the area of the antenna patch or more. Any of the patch and groundplane elments therefore work symmetrically to each other, giving a free space radiation diagram that is the same in the front-as well as in the back directions. When mounted with either side close to a reflection plane such as the car body, a well defined radiation diagram is achieved due to vectorial addition of the direct and reflected signals.

An alternative embodiment of the antenna uses a microstrip dipole that when mounted close to the vehicle gives a directed diagram for the position indication to the sensor in the fuelling robot. This antenna may be of the folded dipole type, and can, if increased antenna gain is needed, be built in an array of e g two dipoles on the same microstrip surface.

The dimension and weight problem is further solved by placing a point source, typically a battery, on the antenna (or groundplane) inside the inter edges, thereby eliminating any new of special space for the battery. Since the battery size is smaller than the antenna, radiation from the antenna is hardly influenced.

The unit may also be powered externally via the microwaves transmitted towards the transponder, should this be of interest.

The cost problem has been solved in that no special tank door has to be used, in that the smaller dimensions of the transponder in itself gives lower material cost and also because the cost of assembly on the vehicle is made simple.

Mounting the transponder on vehicles that are not prepared for automatic fuelling from the factory can be done by placing the transponder on a suggested location on the vehicle side and fixing it to the vehicle with an adhesive. It is also possible to mount it in a metal cup in a hole in the vehicle side, on the outside of the tank door, or on the inside of the tank door, should the tank door be in a microwave transparent material.

Mounting on vehicles that have been for automatic fuelling by a special cavity or recess near the filling point in the car body can be done by assembling the transponder into this cavity or recess in such a way that the vehicle surface after assembly remains flat. This can be done in many ways, e g by fixing the transponder in position with a transponder cap.

The physical appearance problem and stress resistance problem is solved, apart from that the diameter of the unit is small by using an antenna according to the invention, in that the arrangement with the battery on the antenna also permits encapsulation in a low-profile rounded case that both is aestethically attractive and well withstands mechanical stress from e g automatic car wash machines or children's fingers when placed on the vehicle surface with the rounded side out.

The continous position sensing problem has been solved in that the transpossibly also in other locations, in relation to the tank door. On most vehicles, the tank door opens in direction to the front. By this arrangement, the sensor can stay in contact with the transponder throughout the docking procedure, and undesired tank door microwave reflections or hiding effects are prevented.

Still other objects and advantages of the invention will be apparent to those skilled in the art from the following description.

The invention will now be described in connection with exemplifying embodiments shown in the attached drawings, where
Figure 1 shows a block diagram of the transponder;
Figure 2 shows a known transponder with a conventional microstrip patch antenna;
Figure 3 shows an embodiment of a transponder according to the invention;
Figure 4 shows the encapsulated transponder in a profile view;
Figure 5 shows the transponder on a vehicle;
Figure 6 shows an embodiment of a transponder using a single microstrip folded dipole antenna.
Figure 7 shows an embodiment of a transponder using a folded dipole array
Figure 8 shows the transponder mounted in a cup of reflecting material that has been inserted in a hole in the vehicle side.
Figure 9 shows the transponder mounted on the inside of a vehicle's microwave transparent tank door.

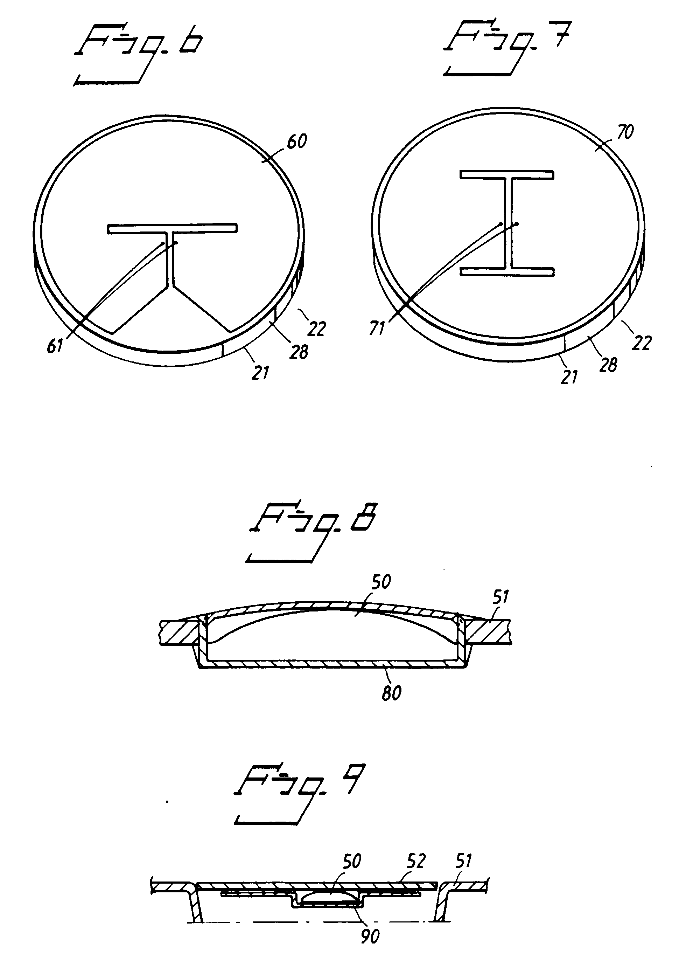

Figure 5 shows an overview of a vehicle that can be automatically fuelled by means of a robot, through a filling point 53 behind the tank door 52, where a transponder 50 in a preferred embodiment is mounted on (or in) the side surface 51 of the vehicle, or possibly on (or behind) the original tank door 52 provided that a reflecting layer with a large extension compared to the transponder antenna is facing the back side of the transponder, thus preventing residue back lobe reflections in the cavity behind the tank door.

Figure 1 shows a block diagram of a transponder that is based on the principle that an incoming microwave signal 1 is modified and reflected 2.

The antenna 3 receives a microwave frequency, e g at 2.45 GHz, from a transmitter/receiver unit in a position indication sensor, not shown on the figure, and transfers this signal to modulation circuits in the modulation unit 4. Using signals from the oscillator circuit 5, the modulation unit will add sidebands to the by the transponder received signal 1, and bring these back to the antenna where they are reradiated 2 into the space in front of the transponder so that the sensor can make the desired position measurement.

A power source 6 supplies the transponder with neccesary energy.

Figure 2 shows a known conventional microstrip patch antenna, where a dielectric material 10 on one side has an antenna element 11 of metal while a ground plane 12 is placed on the opposite side of the antenna element.

If an electrical alternating voltage relative to the ground plane is applied in or in the vicinity of the area 13 of the antenna element, a standing wave will occur in the antenna element in such a way that radiation is made from the electrical field at the edges of the antenna element, indicated by the arrows 14, so that a wave is transferred in the normal direction 15. Reciprocally, an incoming wave will create an alternating voltage in area 13.

This is however only the case if the ground plane 12 is considerably larger than the antenna element 21, otherwise the antenna will radiate also in the opposite direction to 15.

Figure 3 shows a transponder design where the antenna element 20 and the ground plane 21 have about equal size. This antenna type will, if placed in free space, radiate in a similar way both in the direction perpendicular from the antenna element and in the direction perpendicular from the ground plane. If the unit however, as in the invention, is placed near to a reflection plane 22, typically less than a tenth of a wavelenght from, the wave that is radiated in the direction of the metal plane will be reflected there and add almost in phase to the earlier described radiation in direction from the antenna element 20.

This limited groundplane microstrip antenna will operate excellently when mounted close to a reflecting surface in opposition to a standard dipole, mounted close to a reflecting surface in opposition to a standard dipole, Where the reflected signal would cancel the direct signal from the antenna element.

By making use of the reflected signal from a well defined surface such as the car body 51 or a mounting cavity, an extremely accurate position indication signal is possible without negative influence from undefined back lobe reflections.

In a microstrip patch antenna, the radiation comes from the edges of the antenna element and not from the inner parts of the antenna surface. This surface can therefore be used for other purposes, e g to mount the circuits 24, 25, 26 that are needed to obtain an electrical modulation in the antenna feeding point 27 by influencing the point impedance in relation to the ground plane 21.

It is also possible to, without impeding the antenna function, place a power source such as a battery inside the radiating edges of the antenna element. This battery can for symmetrical reasons freely be placed on any side of the dielectric material 28, either as the power source 40 that is indicated in figure 4 or on the side that is directed towards the reflection Surface 22. The transponder will give desired function no matter which of the surfaces 20 or 21 that are placed towards the reflection surface, and no matter of on which side the power source is placed.

A signal received by the antenna element 20 will give an electrical alternating field across the dielectric material 28 in relation to the ground plane 21 in the antenna feeding point 27, which is placed in or near an arm corresponding to the area 13 in figure 2.

The received signal is fed via a conductor 29 to a diode 26, the impedance of which can be varied between different values depending on which voltage that is applied across its terminals. In the shown embodiment there is an integrated circuit 25 which at its output 30 gives a control voltage to the diode 26 which influences its impedance. One side of the diode is from a microwave point of view short circuited to the groundplane by the open quaterwave conductor 31, and will consequently, depending on the voltage from the circuit 25, in a microwave sense more or less connect the point oscillator in the circuit 25.

The described impedance variation by the diode 26 will have as a consequence that a towards the antenna element 20 incoming wavefront will give a reflex where phase and amplitude will be influenced by the impedance in the diode 26.

If the integrated circuit 25 is giving a continuous, e g at 32 kHz, squarewave signal to the diode 26, there will be a 32 kHz modulation on to the incoming microwave frequency from the position sensor, and the reradiated signal from the transponder can now be used by the position sensor to determine the location of the transponder.

The connections 32 and 33 are for voltage supply to the transponder circuits from a power source, not shown in figure 3. Connection pad 32 has by space reasons been placed in an opening in the outer edge of the antenna element 20, but this makes no difference to the antenna function since the antenna has a current minima in this point.

A diode can be used as a rectifier for received microwave signals, where the rectified signal is used for powering the transponder in stead of, or as a complement to, the in the transponder included power source. It is possible to use the diod 26 for this purpose. The advantages of microwave powering are primarily that the unit can be made even smaller than with a battery, and also that the cost of the battery is eliminated.

In another embodiment of the transponder, not shown, the antenna element operates through the dielectric material towards a ground plane as earlier described, but the feeding point of the antenna element is via a through lead conductor in connection with the opposite side of the groundplane, on their own dielectric substrate, placed electronic and microstrip circuits.

In this second embodiement the quarterwave conductor acts towards the same groundplane as the antenna through this extra dielectric substrate that also carries the electronic components and interconnections.

Figure 4 shows a cut-through projection of the transponder. The working principle is the same as earlier described, with a microstrip antenna element 20 and with a purer source 40 mounted inside the outer edge of the antenna element. The shown assembly, where the power source is smaller than the antenna element, makes a rounded encapsulation exterior 41 possible.

Figure 6 shows an embodiment of the transponder where a microstrip folded dipole antenna is used. The microstrip folded dipole function is to some extent similar to that of the patch antenna in that it may be mounted close to a reflecting surface.

The dipole element is formed by a metal surface 60 that is attached to a carrier substrate 28, with a groound plane 21 on its opposite side, and where the assembly is mounted on a reflecting surface 22. The modulation of an incoming microwave signal from the transmitter/receiver unit to the transponder is made by known modulation components which are connected to the antenna element in its feeding points 61 in a similar way as earlier described.

Figure 7 shows an embodiment of the transponder where an array 70 of two microstrip folded dipoles, via a dielectric substrate 28, cooperates with a groundplane 21. The modulation signal is applied in the feeding points 71, and the assembly is mounted on a reflecting plane 22.

According to a prefered embodiment the microwave microstrip conductors 29,31 are mounted inside an opening 35 of the antenna element 20, where the microstrip conductors 29,31 are placed on the same side of a dielectric substrate 28 as the antenna element 20 and acting against the same ground plane 21 as the antenna element. This gives that the transponder including its components can be made small. Further there is no need for wiring throgh the dielectric substrate 28.

According to one embodiment of the invention the reflecting surface 22 forms a part of a vehicle side surface 51, or a tank door 52, or a reflective mounting device 90 on the inside of a microwave transparent tank door. Said mounting device has a diametric extension of at least 1.7 times the diameter of the antenna element 20, 60, 70. Alternatively the reffecting surface forms a part of a mounting cup 80 that is intended for assembling the transponder in a hole in the vehicle side 51 or in the tank door should it be in a reflective material.

Preferably the transponder 50 is mounted on the vehicle side 51 rear, below, above or forward of the tank door 52.

Alternatively the transponder is mounted on the outside of the tank door, where the tank door includes a reflecting surface with a diametric extension at least 1.7 times that of the antenna element.

The transponder can also be mounted behind the tank door should the tank door be in a microwave transparent material, for example a plastic material. Hereby a reflecting device 90 shall be arranged behind the transponder. Such reflecting device can for instance be an electrically conducting surface.

In Figure 8 an embodiment is shown where the transponder is mounted in a mounting cup 80 of a reflective material that has been inserted in a hole or a recess in the vehicle side 51 or tank door.

## Claims

1. An arrangement for positioning a first object relative to a second object comprising a transmitter and receiver unit provided at said first object and a transponder (50) provided at said second object and operating at a frequency in the microwave range, said transponder including a power source (40) and/or one or more electronic units (29,31,24,25,26), an antenna element (20,60,70), a dielectric material (28) and a ground plane (21), said antenna element being arranged with said ground plane via said dielectric material, said ground plane being of similar size as said antenna element, **characterized in** that the antenna element is made in microstrip technique, in that the arrangement further comprises a reflector plane (22) located behind the transponder (50) and at a distance from the antenna element of at most 1/10 of the operating wavelength, the transponder being arranged to cooperate with said reflector plane (22) in order to obtain an antenna radiating diagram that is directed normal to said antenna element and pointing in the direction away from said reflecting plane (22), and in that said power source (40) and/or said one or more electronic units (29,31,24,25,26) are placed inside the circumference of said antenna element (20,60,70) at either side of said dielectric material (28).

2. Arrangement according to claim 1, **characterized in** that the microstrip antenna element is a patch antenna element (20) that via said dielectric material (28) is arranged with said ground plane (21) with a diametric extension of less than 1.7 times, and more than 0.6 times that of the antenna element, and where the reflection of the back lobe thereby created is reflected by said reflector plane (22) behind the transponder and added to the direct signal from the antenna to form a radiating diagram directed perpendicular to the surface of the antenna element.

3. Arrangement according to claim 1, **characterized in** that the microstrip antenna element comprises at least one dipole antenna element (60,70) of a folded type is arranged with said ground plane (21) with a diametric extension of less than 1.7 times, and more than 0.6 times that of the antenna element, and where the reflection of the back lobe thereby created is reflected by said reflector plane (22) behind the transponder and added to the direct signal from the antenna element to form a radiating diagram directed perpendicular to the surface of the antenna element.

4. Arrangement according to claim 1, 2 or 3, **characterized in** that the reflecting surface (22) forms a part of a vehicle side surface (51), or a tank door (52), or a reflective mounting device (90) on the inside of a microwave transparent tank door, where said mounting device has a diametric extension of at least 1.7 times the diameter of the antenna element (20,60,70), or alternatively that the reflecting surface forms a part of a mounting cup (80) that is intended for assembling the transponder in a hole in the vehicle side (51) or in the tank door should it be in a reflective material.

5. Arrangement according to claim 1, 2, 3 or 4, **characterized in** that microwave microstrip conductors (29,31) are mounted inside an opening (35) of the antenna element (20), where the microstrip conductors (29,31) are placed on the same side of a dielectric substrate (28) as the antenna element (20) and acting against the same ground plane (21) as the antenna element.

6. Arrangement according to claim 1, 2, 3 or 4, **characterized in** that the transponder (50) is mounted on the vehicle side (51) rear, below, above or forward of the tank door (52).

7. Arrangement according to claim 1, 2, 3, 4 or 5, **characterized in** that the transponder is mounted behind the tank door should the tank door be in a microwave transparent material, and that a reflecting device (90) is arranged behind the transponder.

8. Arrangement according to any of the previous claims, **characterized in** that the transponder is mounted in a mounting cup (80) of a reflective material that has been inserted in a hole or recess in the vehicle side (51) or tank door.

9. Arrangement according to any of the previous claims, **characterized in** that the transponder powering is made by microwave energy, where a received microwave powering signal is rectified by at least one diode (26) to supply the electronic components with energy.

## Patentansprüche

1. Anordnung zum Positionieren eines ersten Gegenstandes relativ zu einem zweiten Gegenstand mit einer Sender- und Empfängereinheit am ersten Gegenstand und einem Transponder (50) am zweiten Gegenstand, die in einer Frequenz im Mikrowellenbereich arbeiten, wobei der Transponder eine Energiequelle (40) und/oder eine oder mehrere elektronische Einheiten (29, 31, 24, 25, 26), ein Antennenelement (20, 60, 70), ein dielektrisches Material (28) und eine Grundebene (21) aufweist, wobei das Antennenelement mit der Grundebene über das dielektrische Material angeordnet ist, wobei die Grundebene von derselben Größe wie das Antennenelement ist, dadurch gekennzeichnet, daß das Antennenelement in Mikrostreifentechnik hergestellt ist, daß die Anordnung außerdem eine Reflektorebene (22) aufweist, die hinter dem Transponder (50) und in einem Abstand von dem Antennenelement von höchstens einem Zehntel der Betriebswellenlänge angeordnet ist, wobei der Transponder angeordnet ist, um mit der Reflektorebene (22) zusammenzuarbeiten, um ein Antennenstrahlungsdiagramm zu erreichen, das normal zum Antennenelement ausgerichtet ist und in Richtung weg von der Reflektionsebene (22) zeigt, und daß die Energiequelle (40) und/oder die eine oder mehreren elektronischen Einheit(en) (29, 31, 24, 25, 26) innerhalb des Umfangs des Antennenelements (20, 60, 70) auf jeder Seite des dielektrischen Materials (28) angeordnet sind.

2. Anordnung nach Anspruch 1, dadurch gekennzeichnet, daß das Mikrostreifenantennenelement ein Steckantennenelement (20) ist, das über das dielektrische Material (28) mit der Grundebene (21) mit einer diametrischen Ausdehnung von weniger als 1,7 mal, und mehr als 0.6 mal der Ausdehnung des Antennenelements angeordnet ist, und wobei die dadurch erzeugte Reflexion der Hinterkeule von der Reflecktorebene (22) hinter dem Transponder reflektiert wird und zu dem direkten Signal von der Antenne hinzuaddiert wird, um ein Strahlungsdiagramm zu bilden, das senkrecht zur Oberfläche des Antennenelements gerichtet ist.

3. Anordnung nach Anspruch 1, dadurch gekennzeichnet, daß das Mikrostreifenantennenelement wenigstens ein Dipolantennenelement (60, 70) eines Falttyps aufweist, das mit der Grundebene (21) mit einer diametrischen Ausdehnung von weniger als 1,7 mal, und mehr als 0,6 mal der Ausdehnung des Antennenelements angeordnet ist, und wobei die dadurch erzeugte Reflexion der Hinterkeule von der Reflektorebene (22) hinter dem Transponder reflektiert wird und zu dem direkten Signal vom Antennenelement hinzuaddiert wird, um ein Strahlungsdiagramm zu bilden, das senkrecht zur Oberfläche des Antennenelements gerichtet ist.

4. Anordnung nach Anspruch 1, 2 oder 3, dadurch gekennzeichnet, daß die Reflektionsfläche (22) einen Teil einer Fahrzeugseitenoberfläche (51) oder eines Tankdeckels (52) oder einer reflektierenden Befestigungsvorrichtung (90) auf der Innenseite eines mikrowellendurchlässigen Tankdeckels ist, wobei die Befestigungsvorrichtung eine diametrale Ausdehnung von wenigstens 1,7 mal dem Durchmesser des Antennenelements (20, 60. 70) hat, oder daß alternativ die Reflektionsoberfläche einen Teil eines Montagebechers (80) bildet, der dafür vorgesehen ist, den Transponder in einem Loch in der Fahrzeugseite (51) oder im Tankdeckel aufzunehmen, sofern er aus reflektierendem Material besteht.

5. Anordnung nach Anspruch 1, 2, 3 oder 4, dadurch gekennzeichnet, daß die Mikrowellenmikrostreifenleiter (29,31) innerhalb einer Öffnung (35) des Antennenelements (20) befestigt sind, wobei die Mikrostreifenleiter (29, 31) auf derselben Seite des dielektrischen Substrats (28) wie das Antennenelement (20) angeordnet sind und gegen dieselbe Grundebene (21) wie das Antennenelement arbeiten.

6. Anordnung nach Anspruch 1, 2, 3 oder 4, dadurch gekennzeichnet, daß der Transponder (50) auf der Fahrzeugseite (51) hinter, unterhalb, oberhalb oder vor dem Tankdeckel (52) angeordnet ist.

7. Anordnung nach Anspruch 1, 2, 3, 4 oder 5, dadurch gekennzeichnet, daß der Transponder hinter dem Tankdeckel montiert ist, sofern der Tankdeckel aus einem mikrowellendurchlässigen Material besteht, und daß eine Reflektionsvorrichtung (90) hinter dem Transponder angeordnet ist.

8. Anordnung nach einem der vorhergehenden Ansprüche, dadurch gekennzeichnet, daß der Transponder in einem Montagebecher (80) aus reflektierendem Material befestigt ist, das in einem Loch oder einer Ausnehmnüng in der Fahrzeugseite (51) oder im Tankdeckel eingesetzt ist.

9. Anordnung nach einem der vorhergehenden Ansprüche, dadurch gekennzeichnet, daß die Energieversorgung des Transponders durch Mikrowellenenergie hergestellt wird, wobei ein empfangenes Mikrowellenenergiesignal durch wenigstens eine Diode (26) gleichgerichtet wird, um die elektronischen Komponenten mit Energie zu versorgen.

## Revendications

1. Système pour positionner un premier objet par rapport à un deuxième objet, comprenant un bloc émetteur et récepteur prévu à l'endroit du premier objet, ainsi qu'un transpondeur (50) prévu à l'endroit du second objet et fonctionnant à une fréquence se situant dans la gamme des micro-ondes, ce transpondeur comprenant une source de puissance (40) et/ou une ou plusieurs unités électroniques (29, 31, 24, 25, 26), un élément d'antenne (20, 60, 70), un matériau diélectrique (28) et une surface portante (21), l'élément d'antenne étant disposé sur la surface portante avec interposition du matériau diélectrique, la surface portante étant de taille analogue à celle de l'élément d'antenne,
caractérisé en ce que
l'élément d'antenne est réalisé en technique (microstrip) ou microbande, en ce que le système comprend en outre un plan réflecteur (22) placé derrière le transpondeur (50) et à une distance de l'élément d'antenne d'au maximum 1/10 de la longueur d'onde de fonctionnement, le transpondeur étant disposé pour coopérer avec le plan réflecteur (22) pour obtenir un diagramme de rayonnement d'antenne qui est dirige perpendiculairement à cet élément d'antenne et qui est pointé dans la direction s'écartant du plan réflecteur (22), et en ce que la source de puissance (40) et/ou l'unité ou les unités électroniques (29, 31, 24, 25, 26) sont placées à l'intérieur de la circonférence de l'élément d'antenne (20, 60, 70) de l'un ou l'autre côté du matériau diélectrique (28).

2. Système selon la revendication 1,
caractérisé en ce que
l.élément d'antenne microstrip est un élément d'antenne plan (20) qui, par l'intermédiaire du matériau électrique (28), est disposé sur la surface portante (21) avec une extension diamétrale de moins de 1,7 fois et de plus de 0,6 fois celle de l'élément d'antenne, le lobe arrière ainsi créé étant réfléchi par le plan réflecteur (22) derrière le transpondeur et ajouté au signal direct provenant de l'antenne, de manière à former un diagramme de rayonnement dirigé perpendiculairement à la surface de l'élément d'antenne.

3. Système selon la revendication 1,
caractérisé en ce que
l'élément d'antenne microstrip comprend au moins un élément d'antenne dipôle (60, 70) de type replié, qui est disposé sur la surface portante (21) avec une extension diamétrale de moins de 1,7 fois et de plus de 0,6 fois celle de l'élément d'antenne, le lobe arrière ainsi créé étant réfléchi par le plan réflecteur (22) derrière le transpondeur, et ajouté au signal direct provenant de l'élément d'antenne, de manière à former un diagramme de rayonnement dirigé perpendiculairement à la surface de l'élément d'antenne.

4. Système selon la revendication 1, 2 ou 3,
caractérisé en ce que
la surface de réflecteur (22) forme une partie de la surface latérale (51) d'un véhicule, ou une porte de réservoir (52), ou encore un dispositif de montage réfléchissant (90) sur l'intérieur d'une porte de réservoir transparente aux micro-ondes, le dispositif de montage ayant une extension diamétrale d'au moins 1,7 fois le diamètre de l'élément d'antenne (20, 60, 70), ou, en variante, la surface réfléchissante formant une partie d'une coupelle de montage (80) qui est destinée à monter le transpondeur dans un trou de la surface latérale (51) du véhicule, ou dans la porte du réservoir si elle est en matériau réfléchissant.

5. Système selon la revendication 1, 2, 3 ou 4,
caractérisé en ce que
des conducteurs microstrip micro-ondes (29, 31) sont montés à l'intérieur d'une ouverture (35) de l'élément d'antenne (20), ces conducteurs microstrip (29, 31) étant placée du même côté d'un substrat diélectrique (28) que l'élément d'antenne (20), et agissant contre la même surface portante (21) que l'élément d'antenne.

6. Système selon la revendication 1, 2, 3 ou 4,
caractérisé en ce que
le transpondeur (50) est monté sur le côté arrière (51) du véhicule, en dessous, au-dessous ou en avant de la porte de réservoir (52).

7. Système selon la revendication 1, 2, 3, 4 ou 5,
caractérisé en ce que
le transpondeur est monté derrière la porte de réservoir à condition que cette porte de réservoir soit en matériau transparent aux micro-ondes, et en ce qu'un dispositif réfléchissant (90) est disposé derrière le transpondeur.

8. Système selon l'une quelconque des revendications précédentes,
caractérisé en ce que
le transpondeur est monté dans une coupelle de (80) d'un matériau réfléchissant ayant été introduit dans un trou ou une cavité de la surface latérale (51) du véhicule ou dans la porte de réservoir.

9. Système selon l'une quelconque des revendications précédentes,
caractérisé en ce que
l'alimentation de puissance du transpondeur est effectuée par de l'énergie micro-ondes, le signal d'alimentation micro-ondes reçu étant redressé par au moins une diode (26) pour alimenter en énergie les composants électroniques.
